# EUROPEAN PATENT APPLICATION

(11) **EP 1 744 105 A2**
(43) Date of publication of application: **17.01.2007**
(21) Application number: 06253561.2
(22) Date of filing: 06.07.2006
(51) Int. Cl.: F24D 19/10

(54) **Heating/cooling systems**

(30) Priority: 14.07.2005 GB 0514436
(71) Applicant: Neill, David, Exeter, Devon EX3 0RA (GB)
(72) Inventor: Neill, David, Exeter, Devon EX3 0RA (GB)
(74) Representative: Brown, Michael Stanley

(57) **Abstract**

A fluid-based heating/cooling system includes valve means (C) for controlling the rate of flow of fluid through the system and operating means (A, D) for effecting operation of the valve means (C) in response to the difference in temperature of the fluid at two points in the system.

## Description

### Field of the Invention

This invention relates to heating/cooling systems and is primarily concerned with water- or other fluid-based heating systems, such as warm water underfloor heating systems and radiator heating systems, which include means for controlling the heat output by regulating the rate of flow of water or other fluid through the heat-emitting elements of the system.

The invention is also applicable to fluid-based cooling systems.

In a heating system, such as a warm water underfloor heating system, the output from the heating elements, which are typically lengths of plastic tubing, depends on the mean water temperature (MWT) in the tubing. The MWT normally corresponds closely to the mean of the temperature of the water entering the system and the temperature of the water leaving the system. It will be seen that the higher the MWT the higher the quantity of heat that is emitted.

When the air temperature of the room or space being heated is low, the emitter loses heat at a relatively rapid rate resulting in a lower water return temperature and a corresponding reduction in the MWT. With such a situation, it is desirable to restore the MWT in order to heat the room or space more rapidly. This can be achieved either by increasing the temperature of the entry water, which in many cases is impractical and/or expensive, or by increasing the rate of flow.

It is accordingly an object of the present invention to provide a fluid-based heating/cooling system that includes means for changing the rate of flow of fluid through the system.

### Summary of the Invention

According to a first aspect of the present invention there is provided a fluid-based heating/cooling system that includes:-
valve means for controlling the rate of flow of fluid through the system, the valve means comprising a valve body having a first flow path for entry of fluid into the system, a second flow path for exit of fluid from the system, and a valve closure member movable between open and closed positions,
temperature sensing means for determining the difference between the temperature of the fluid entering the first flow path and the temperature of the fluid leaving the second flow path, and
operating means for controlling the degree of opening of the valve closure member in response to said difference in temperature.

The valve closure member may be contained in either or both of the flow paths.

In operation, the valve closure member will normally be pre-set to a steady state flow condition and will open and close relative to this pre-set position.

The two flow paths may contain bi-metallic strips or other expansion elements arranged to act on the valve closure member in opposed directions such that the extent of movement of the valve closure member is dependent on the difference in the temperatures of the fluid in the two flow paths.

Other means for determining the temperature difference may be provided. For example, temperature sensors may be provided for determining the temperature of the fluid entering the system and the temperature of the fluid leaving the system and sending a signal to a separate operating device controlling operation of the valve means such that the degree of opening of the valve means is dependent on the difference between the temperature of the fluid entering the system and the temperature of the fluid leaving the system.

According to a second aspect of the present invention there is provided valve means for a heating/cooling system, the valve means comprising:-
a valve body having a first flow path for entry of fluid into the system, a second flow path for exit of fluid from the system, a valve closure member contained in one of the flow paths and movable between open and closed positions,
temperature sensing means for determining the difference between the temperature of the fluid entering the first flow path and the temperature of the fluid leaving the second flow path, and
operating means for controlling the degree of opening of the valve closure member in response to said difference in temperature.

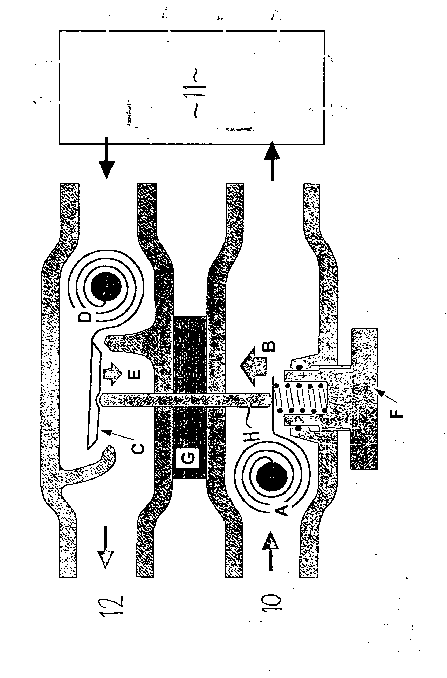

### Brief Description of the Drawing

The single figure of the drawing is a sectional view of a valve that connects the flow and return channels of a heating zone in a warm water underfloor heating system.

### Description of the Preferred Embodiment

Warm water is supplied at a controlled temperature from a heat source such as a boiler along a supply line 10 to a valve the body of which contains first and second flow paths. The warm water flows along the first flow path to a heat emitter 11, which is typically a series of pipes or coils of an underfloor heating system. After passing through the heat emitter 11, and losing a proportion of its heat, the warm water flows back through the valve body along the second flow path to a return line 12.

The first flow path contains a first bi-metallic strip A having a free end that bears against one end of a stem H of a valve closure member C. The stem H is spring-loaded and the free end of the strip A applies a force to the valve stem H as represented by the arrow B. The valve closure member C is movable relative to a valve seat contained within the valve body and the arrangement is such that the force applied at B is dependent on the temperature of the water flowing over the first bi-metallic strip A.

The second flow path within the valve body contains a second bi-metallic strip D, which has a free end that acts in the valve closure member C and applies a force thereto, as represented by the arrow E, in opposition to the force B applied by the first bi-metallic strip A. The water flowing through the emitter 11 returns to the valve body at a lower temperature than that supplied to the valve body and causes the bi-metallic strip D to generate a force E tending to move the valve closure member C into its closed position, the force E always being less than the force B when the invention is applied to a heating system. The net force applied to the valve closure member C is determined by the difference between forces B and E and this difference in force is determined by the difference in temperature between the supply flow and the return flow.

Thus, compared with a fixed aperture valve, the valve shown in the drawing causes the rate of flow to increase and the mean water temperature to be raised when a greater heat output is required from the emitter 11, and causes it to be reduced when less heat output is required. This results in a faster heating response in the zone being heated and, when such a valve is fitted in each zone of a heating system having a plurality of zones, a better balance is obtained in respect of the relative heating performances of the zones.

As shown in the drawing, a spring acts on the stem H of the valve closure member C and an adjustment member F is provided for adjusting the initial setting of the valve closure member C, i.e. its pre-set position can be adjusted if required. The system may also include shut-off valves or zone valves to provide additional functionality. The shut-off or zone valves may be separate upstream or downstream elements, or may be integrated using common valve closure seating.

The particular example shown in the drawing involves the use of two bi-metallic strips A and D for operation of a single valve closure member C. Valve operation may, of course, be effected by other means, for example, differential temperature sensing may be effected electrically, electronically or mechanically.

In an alternative arrangement (not shown), there are two valve closure members, one in each flow path. This will allow the valve to be shut off completely during installation and maintenance. It will also facilitate the incorporation of shut-off valves and/or zone valves.

The means of operating the two valve closure members may include a manual screw closure element operating on the pin H in the direction of force E, or a motorised zone valve actuator to achieve the same effect.

Although specific reference has been made above to underfloor heating systems, the invention is equally applicable to heating systems that include radiators and to cooling systems in which a cold fluid is used for cooling purposes.

## Claims

1. A fluid-based heating/cooling system that includes:-
valve means for controlling the rate of flow of fluid through the system, the valve means comprising a valve body having a first flow path for entry of fluid into the system, a second flow path for exit of fluid from the system, and a valve closure member movable between open and closed positions,
temperature sensing means for determining the difference between the temperature of the fluid entering the first flow path and the temperature of the fluid leaving the second flow path, and
operating means for controlling the degree of opening of the valve closure member in response to said difference in temperature.

2. A fluid-based heating/cooling system as claimed in Claim 1, in which the valve closure member is pre-set to a steady state flow condition and will open and close relative to this pre-set position.

3. A fluid-based heating/cooling system as claimed in Claim 1, in which the two flow paths contain bi-metallic strips or other expansion elements arranged to act on the valve closure member in opposed directions such that the extent of movement of the valve closure member is dependent on the difference in the temperatures of the fluid in the two flow paths.

4. A fluid-based heating/cooling system as claimed in Claim 1, which includes temperature sensors for determining the temperature of the fluid entering the system and the temperature of the fluid leaving the system and sending a signal to a separate operating device controlling operation of the valve means.

5. Valve means for a heating/cooling system, the valve means comprising:-
a valve body having a first flow path for entry of fluid into the system, a second flow path for exit of fluid from the system, a valve closure member contained in one of the flow paths and movable between open and closed positions,
temperature sensing means for determining the difference between the temperature of the fluid entering the first flow path and the temperature of the fluid leaving the second flow path, and
operating means for controlling the degree of opening of the valve closure member in response to said difference in temperature.

6. Valve means as claimed in Claim 5, which includes two bi-metallic strips or other expansion elements arranged to act on the valve closure member in opposed directions such that the extent of movement of the valve closure member is dependent on the difference in the temperatures of the fluid in the two flow paths.
